# EUROPEAN PATENT APPLICATION

(11) **EP 1 555 113 A1**
(43) Date of publication of application: **20.07.2005**
(21) Application number: 03751306.6
(22) Date of filing: 01.10.2003
(51) Int. Cl.: B29D 30/38

(54) **METHOD AND APPARATUS FOR FORMING CORD REINFORCEMENT LAYER FOR TIRE**

(30) Priority: 01.10.2002 JP 2002288659
(71) Applicant: Bridgestone Corporation, Tokyo 104-8340 (JP)
(72) Inventor: SUDA, Nobuyuki, Kodaira-shi, Tokyo 187-8531 (JP)
(74) Representative: Whalley, Kevin
(86) International application number: PCT/JP2003/012611
(87) International publication number: WO 2004/030899

(57) **Abstract**

A method for forming a cord reinforcement layer for tires, and a cord reinforcement member-forming apparatus for carrying out the method, flexibly allow small-lot tire production and provide tires with high uniformity level, by coating the cords with rubber in advance and attaching the rubber-coated cords one by one onto a tire-forming drum in its circumferential direction.

## Description

### FIELD OF THE INVENTION

The present invention relates to a method for forming a cord reinforcement layer for tires, constituting a tire carcass ply or belt layer, as well as a cord reinforcement layer-forming apparatus for carrying out the method. In particular, the invention relates to a method for forming a cord reinforcement layer for tires, which is suitable for small-sized lot production of tires, and capable of improving the uniformity level, as well as a cord reinforcement layer-forming apparatus for carrying out the method.

### BACKGROUND ART

A conventional method for forming a cord reinforcement layer constituting a tire carcass or belt is as follows. That is, a tire cord fabric is passed between calendar rolls at high speed, so that the tire cord fabric is coated on its both sides with rubber, and then wound around a large winding reel and temporarily stored as an intermediate stock. After that, the tire cord fabric is unwound out of the large winding reel and cut into small pieces at a predetermined length D by a bias cutter. These small pieces are joined together in the direction intersecting the longitudinal direction of the cord, so as to form a continuous sheet with the width D, which is wound around a small winding reel and stored as an intermediate stock. When shaping a tire of a predetermined size with a predetermined shaping machine, the small winding reel corresponding to that size is taken out of the intermediate stock and set onto the shaping machine. And then, the steps of unwinding the continuous sheet out of the small winding reel, winding it around a shaping drum and cutting it off to the length of a single tire are repeated so as to successively form cord reinforcement layers for tires to be built continuously.

This conventional method is efficient in mass production of tires of the same size. However, in the case of small-lot production system capable of responding to diversified consumer needs, tires in small lots must be built by frequently switching the size, thereby requiring enormous amount of the intermediate stocks of the large reels and small reels. Moreover, since such equipments as bias cutters are mainly for mass production, size switching requires considerable time, and the smaller the lot becomes, the problem of wasted time for size change becomes more serious.

In order to solve this problem, there have been made some proposals. One such proposal is disclosed in JP2001-328180A, for example, and provides a method that lengthy ribbon strips comprising a predetermined number of cords coated with rubber are directly applied onto a shaping drum and cut off, and the cut-off strips are arranged without interval in the circumferential direction of the shaping drum so as to form a cord reinforcement layer. In the case of a cord reinforcing material for a carcass of radial tire, since the longitudinal direction of the cord is in parallel with the axis of the shaping drum, the cord reinforcement layer can be formed by cutting the ribbon strips at a length corresponding to the total width of the cord reinforcement layer on the shaping drum, and by attaching the cut-off pieces in the number determined by dividing the circumferential length of the shaping drum by the ribbon strip width w. And this method can be realized by setting the relation between the circumferential length of the shaping drum and the ribbon strip width so that the circumferential length of the shaping drum in various sizes becomes the integral multiples of the ribbon strip width w.

With this method, a single ribbon strip width w can support production of tires in many sizes and the intermediate stocks can be reduced since there is no need to prepare ribbon strips with different widths. Moreover, the problems of the prior art can be solved to some extent since different total widths of various cord reinforcement layers can be supported only by changing the cutting length, which does not need time for size switching. However, if the accuracy of the ribbon width is poor, there may be caused a clearance between ribbon pieces adjoining each other in the circumferential direction on the shaping drum circumference or at the joining portion where they are overlapped with each other. If all the ribbons are joined on the circumference of the shaping drum with a minute overlapping portion in order to prevent such a problem, the RFV (radial force variation) component of the order corresponding to the number of the ribbon pieces is caused in response to the overlapping portion so as to degrade the uniformity level.

As another proposal, with reference to the cord reinforcing member for a carcass of radial tires, by way of example, lengthy ribbon strips comprising a predetermined number of cords that are coated with rubber is coiled around a dedicated drum for forming a cord reinforcement layer in the helical state so as to form a band, and then, the band is cut along the axial direction of the dedicated drum to be made open and the cut-open piece is wound around a shaping drum so as to form a cord reinforcement layer. At this time, the cut-open piece is wound so that its circumferential direction on the dedicated drum corresponds to the axial direction on the shaping drum. This proposal is disclosed, for example, in WO 2001/17760 A1.

This method is improved from the conventional method in that the intermediate stock can be reduced due to a single width of the ribbon that can support tire production in many sizes. Since, however, the circumferential length of the dedicated drum corresponds to the total width of the cord reinforcement layer on the shaping drum, the dedicated drums are needed at least in the number of the total widths of the cord reinforcement layer, which makes the cost and space for the dedicated drums enormous. Moreover, due to fluctuation in stretching or shrinkage of the piece to be wound in winding the cut-open piece around the shaping drum, it is difficult to join the leading end and the trailing end of this piece in the circumferential direction on the shaping drum without clearance or overlapping, and the joint portion may become uneven to degrade the uniformity level.

The present invention has been accomplished in view of these problems, and intends to provide a method for forming a cord reinforcement layer for tires, which can flexibly cope with small-lot production and which is capable of producing tires with high uniformity level, and also to provide a cord reinforcement layer-forming apparatus for carrying out the method.

### DESCRIPTION OF THE INVENTION

The present invention achieves the above-mentioned object, and its constitution and function will be described below.

(1) The present invention provides a method for forming a cord reinforcement layer for tires, wherein a rubber-coated cord having a predetermined length and comprising a cord coated with rubber in advance is attached one by one on a tire shaping drum in parallel with, or with inclination to, the axis of the shaping drum.

With the method for forming a cord reinforcement layer for tires according to the present invention, since a rubber-coated cord is attached onto the shaping drum one by one, there is no need for intermediate stocks for large or small reels as in the conventional forming method for a cord reinforcement layer for tires. Also, since different tire sizes can also be supported only by changing the cutting length of the rubber-coated cord on the shaping drum, the productivity is not lowered by size switching. Moreover, the uniformity level can be improved because the rubber-coated cord can be arranged on the circumference of the shaping drum uniformly.

(2) The present invention further provides a method for forming a cord reinforcement layer for tires according to item (1), wherein, when attaching said rubber-coated cord onto the shaping drum, after the rubber-coated cord is laminated in two layers of a radially inner layer and a radially outer layer, the rubber-coated cord in the outer layer is press-fitted between the rubber-coated cords in the inner layer.

With this aspect of the method for forming a cord reinforcement layer for tire according to the present invention, since the rubber-coated cord in the outer layer is press-fitted between the rubber-coated cords in the inner layer, the interval between the cords in the circumferential direction can be made closer.

(3) The present invention further provides a cord reinforcement layer-forming apparatus used for carrying out the method for forming a cord reinforcement layer for tires according to item (1) or (2), comprising:
a cord attaching/cutting machine for attaching the rubber-coated cord onto a shaping drum one by one as well as cutting a continuous rubber-coated cord into said predetermined length; a relay drum for unwind a cord out of a cord reel and feeding it to the cord attaching/cutting machine; a rubber coating machine for continuously coating the cord with rubber between the cord reel and the relay drum; and a festoon for adjusting excess or shortage of the rubber-coated cord generated between the cord attaching/cutting machine and the relay drum.

The cord reinforcement layer-forming apparatus according to the present invention can easily carry out the method for forming a cord reinforcement layer for tires according to item (1) or (2) with the above-described constitution, can continuously perform process steps from unwinding of the cord to attachment of the rubber-coated cord having a predetermined length onto the shaping drum, and can further reduce space for the intermediate stock.

### BRIEF DESCRIPTION OF THE DRAWINGS

FIG. 1 is a schematic perspective view showing the constitution of a cord reinforcement layer-forming apparatus according to a preferred embodiment of the present invention.

FIG. 2 is a schematic side view showing a variation of this preferred embodiment, as seen in the direction of arrow II-II in FIG. 1.

FIG. 3 is a schematic side view corresponding to arrow II-II in FIG. 1.

FIG. 4 is a schematic perspective view of a shaping drum for shaping a belt tread band, showing the method for forming a cord reinforcement layer for the belt.

### BEST MODE FOR CARRYING OUT OF THE INVENTION

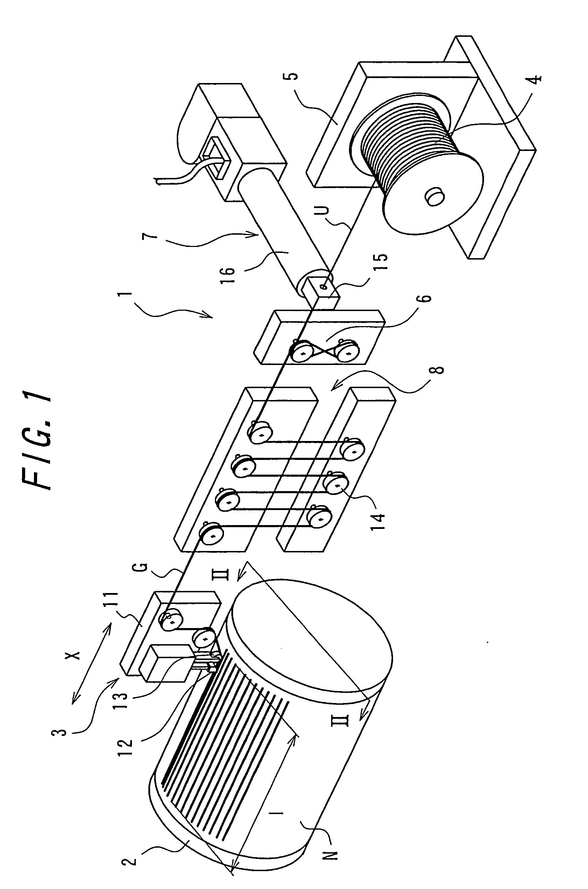

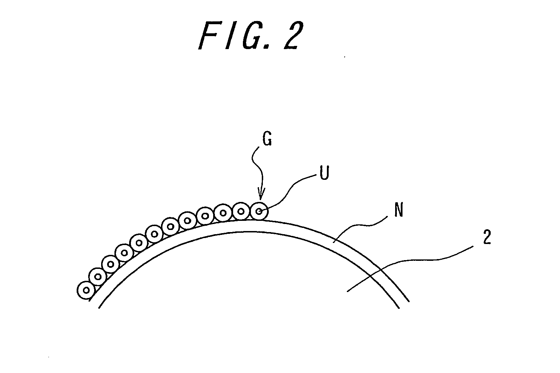

A preferred embodiment of the present invention will be described below based on FIGS. 1 to 4. FIG. 1 is a schematic perspective view showing the constitution of a cord reinforcement layer-forming apparatus 1 for forming a cord reinforcement layer of a carcass of a radial tire and FIG. 2 is a schematic side view as seen in the direction of arrow II-II in FIG. 1. This cord reinforcement layer-forming apparatus 1 is provided with a cord attaching / cutting machine 3 for attaching a robber-coated cord G onto a shaping drum 2 one by one, for shaping a carcass band, a reel stand 5 for rotatably supporting a cord reel 4, a relay drum 6 for unwinding a cord U not yet coated with rubber out of the cord reel 4 as well as for continuously delivering it to the cord attaching/cutting machine 3, a rubber coating machine 7 for continuously coating the cord U with rubber between the cord reel 4 and the relay drum 6, and a festoon 8 for adjusting excess or shortage of the rubber-coated cord G generated between the intermittently operating cord attaching/cutting machine 3 and the continuously operating relay drum 6.

The cord attaching/cutting machine 3 is provided with a cutter 12 for cutting the rubber-coated cord G, a pressure roller 13 for pressing the rubber-coated cord G onto the shaping drum and a moving base 11 having them loaded and reciprocating in parallel with the axis of the shaping drum 2, and the cutter 12 and the pressure roller 13 are mounted onto the moving base 11 in the state where they can move closer to or away from the shaping drum 2.

The rubber coating machine 7 is provided with an insulation head 15 having a through hole through which the cord is passed for continuously coating the cord with rubber in the through hole and a rubber extruder 16 for continuously supplying coating rubber from the direction crossing this through hole.

The method for forming a cord reinforcement layer of a carcass using the cord reinforcement layer-forming apparatus 1 constituted as above will be described below. FIG. 1 shows the state where an inner liner N has been already attached to the shaping drum 2 with a plurality of cords G with rubber cut into a predetermined length 1 are arranged at the predetermined pitch on a portion in the circumferential direction of the circumference of the drum, while the cord attaching/cutting machine 3 holds the attitude that the moving base 11 is located at the right end of the shaping drum 2 and the cutter 12 and the pressure roller 13 being separated from the shaping drum 2.

After the state shown in FIG. 1, the shaping drum 2 is pitch-rotated by a micro angle corresponding to the attaching pitch in the circumferential direction of the rubber-coated cord G, and the moving base 11 of the cord attaching/cutting machine 3 is displaced to the left end along the direction X in parallel with the axis of the shaping drum 2. At this time, since the rubber-coated cord G held by the pressure roller 13 of the cord attaching/cutting machine 3 is also moved to the left with the pressure roller 13, a weight 14 of the festoon 8 is raised, and a cord accumulation amount at the festoon 8 is decreased.

Next, the pressure roller 13 holding the tip end of the rubber-coated cord G is made closer to the shaping drum 2, and the tip end of the rubber-coated cord G is pressed and attached onto the inner liner N. And while the pressure roller 13 is pressed onto the shaping drum 2, the moving base 11 is displaced to the right at a predetermined speed and then, by rotation of the pressure roller 13, the rubber-coated cord G is pressed and attached onto the inner liner N sequentially from the left to the right. And when the moving base reaches the left end in FIG. 1, the cutter 12 is lowered to cut off the rubber-coated cord G. In this way, the rubber-coated cord G with the length 1 can be arranged on the shaping drum 2. After that, while the tip end of the rubber-coated cord G of the remaining portion of cutting on the side of the cord attaching/cutting machine 3 is held by the pressure roller 13, the cutter 12 and the pressure roller 13 are separated from the shaping drum 2. And the process returns to that of pitch-rotation of the above-descried shaping drum 2 by the micro angle.

Also, the supply of the rubber-coated cord G to the festoon 8 is performed by the relay drum 6, and the relay drum 6 is constituted so as to discharge the wound rubber-coated cord G at the same time as the winding of the rubber-coated cord G so that the discharged rubber-coated cord G is withdrawn by the weight 14 of the festoon 8 and stored in the festoon 8. Since the cord of the rubber-coated cord G wound by the relay drum 6 is directly connected to the cord reel 4, the cord U is delivered from the cord reel 4 through winding by the relay drum 6. After being delivered from the cord reel 4, the cord U is passed through the through hole provided at the insulation head 15 of the rubber coating machine 7. On this occasion, rubber supplied from the rubber extruder 16 is made to cover the outer periphery of the cord U.

In the method for forming a cord reinforcement layer described above with reference to FIG. 1, the rear end of the rubber-coated cord G with its tip end attached onto the shaping drum 2 is cut off, and the rubber-coated cord G with the predetermined length 1 is arranged on the shaping drum 2. Alternatively, however, it may be so constituted that, before attaching the rubber-coated cord G onto the shaping drum 2, the rubber-coated cord G is cut into the length 1 and then, this cut cord is attached to the shaping drum.

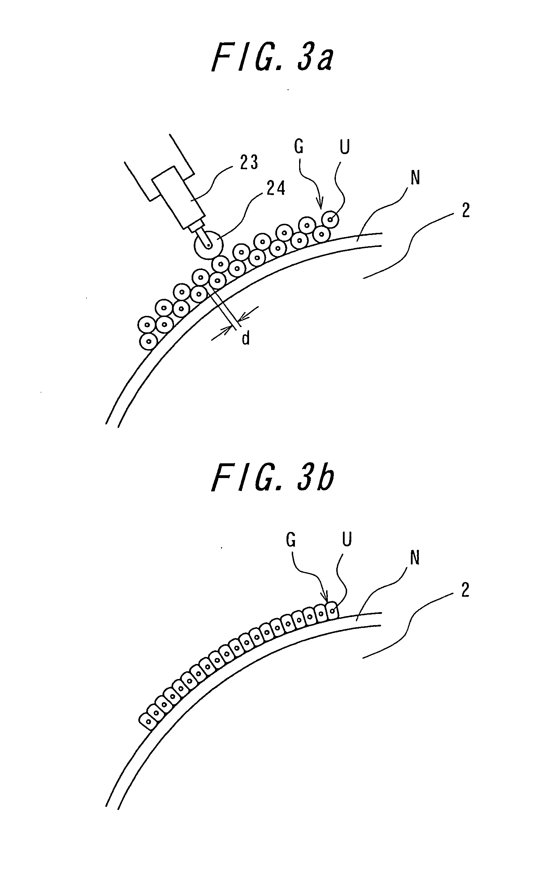

FIG. 3 is a schematic side view showing a variation of the preferred embodiment corresponding to arrow II-II in FIG. 1. In order to make the arrangement pitch of the rubber-coated cord G on the shaping drum 2 closer, the rubber-coated cord G cut into the predetermined length 1 is formed in two layers in the radial direction on the shaping drum 2, as shown in FIG. 3(a), and the circumferential pitch of the cords G with rubber in each layer is set as a pitch with a slight clearance d between the cords G adjoining each other in the circumferential direction. And while a press-fit roller 24 is pressed by a press-fit cylinder 23, the press-fit cylinder 23 is moved along the outer periphery so that the rubber-coated cord G in the outer layer in the radial direction of the two layers can be press-fit in the clearance between the cords G in the inner layer in the radial direction, as shown in FIG. 3(b), and a single-layered cord reinforcement layer can be formed with the circumferential arrangement pitch of the rubber-coated cord G half the pitch when arranged in two layers.

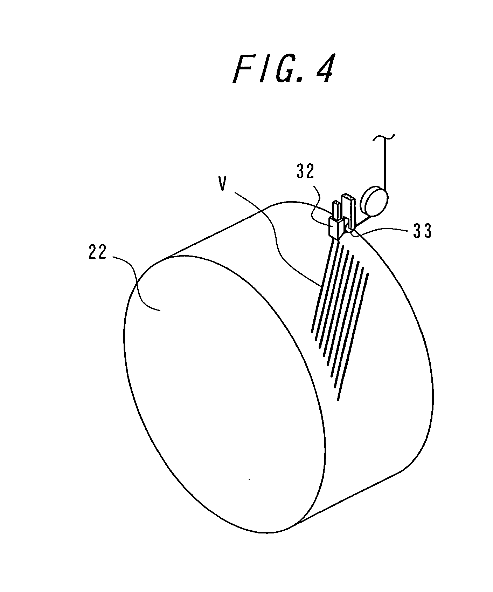

Preferred embodiments of the present invention have been explained above with reference to the cord reinforcement layer constituting a radial carcass. However, unless the cord direction of the cord reinforcement layer on the shaping drum intersects the shaping drum axis at right angles, the present invention may be applied to this sort of cord reinforcement layer. For example, as shown in FIG. 4 as a schematic perspective view of the shaping drum 22 for shaping a belt tread band, the present invention can be applied to the cord reinforcement layer constituting a belt for radial tires. In this case, since the longitudinal direction of the rubber-coated cord V is inclined with respect to the axis of the shaping drum 22, the arrangement of such a cord on the circumference of the shaping drum 22 requires arcuate movement of a cutter 32 and a pressure roller 33. In other respects, however, the arrangement can be performed in the same manner as for formation of the cord reinforcement layer for a carcass.

### INDUSTRIAL APPLICABILITY

It will be appreciated from the foregoing description that, according to the present invention, since a rubber-coated cord with a predetermined length coated with rubber in advance is attached one by one on a tire shaping drum, small-lot production can be flexibly supported and manufacture of tires with a high uniformity level is enabled.

## Claims

1. A method for forming a cord reinforcement layer for a tire, wherein a rubber-coated cord with a predetermined length and coated with rubber in advance is attached one by one onto a tire shaping drum in parallel with, or with inclination relative to, the axis of the shaping drum.

2. A method for forming a cord reinforcement layer for a tire according to claim 1, wherein, when attaching said rubber-coated cord onto the shaping drum, after the rubber-coated cord is laminated in two layers comprising a radially inner layer and a radially outer layer, the rubber-coated cord in the outer layer is press-fitted between the rubber-coated cords in the inner layer.

3. A cord reinforcement layer-forming apparatus for carrying out the method according to claim 1 or 2, for forming a cord reinforcement layer for tires, comprising:
a cord attaching / cutting machine for successively attaching the rubber-coated cords onto a shaping drum, as well as cutting continuous rubber-coated cord into said predetermined length; a relay drum for unwinding cords out of a cord reel and feeding the cords to the cord attaching / cutting machine, a rubber coating machine for continuously coating the rubber-coated cord between the cord reel and the relay drum; and a festoon for adjusting excess or shortage of the rubber-coated cord generated between the cord attaching / cutting machine and the relay drum.
